Europäisches Patentamt

European Patent Office

Office européen des brevets

(11) Publication number: **0 333 939**
A2

## EUROPEAN PATENT APPLICATION

(21) Application number: 88203024.0

(22) Date of filing: 23.12.88

(51) Int. Cl.4: **G01N 21/05 , G01N 21/85 , G02B 26/08 , G02B 6/26**

The title of the invention has been amended (Guidelines for Examination in the EPO, A-III, 7.3).

(30) Priority: 28.12.87 NL 8703139

(43) Date of publication of application:
27.09.89 Bulletin 89/39

(84) Designated Contracting States:
CH DE ES FR GB IT LI NL

(71) Applicant: Beukeveld, G.J.J., Drs.
Lavendelweg 105
NL-9731 HT Groningen(NL)

Applicant: Beukeveld, F.J.
van Toutenburglaan 106
NL-7742 XM Coevorden(NL)

(72) Inventor: Beukeveld, G.J.J., Drs.
Lavendelweg 105
NL-9731 HT Groningen(NL)
Inventor: Beukeveld, F.J.
van Toutenburglaan 106
NL-7742 XM Coevorden(NL)

(54) Capillary flow cell for optically analysing fluids, and apparatus comprising said cell.

(57) Universal flow cells for simultaneously and/or separately performing of all kinds of single or multiple light beam measurements. The detector flow cells are characterized by a capillary flow channel (17) passing transversely through one or more optical fibres (11-16) and/or several optical fibres extending transversely from the flow channel (42, 52, 62, 72). At one end the fibres are optically coupled to the flow channel while at the other end a light source and/or a monochromator and/or a fibre coupler can be fitted.

FIG·8

EP 0 333 939 A2

## Detector flow cell for identification and quantification of compounds with the aid of light and an apparatus furnished with a similar detector flow cell.

The present invention is directed to a detector flow cell for identification and quantification of compounds with the aid of light, and to an apparatus furnished with a similar detector flow cell.

Similar detector flow cells are known and are for instance used in liquid chromatography. In liquid chromatography compounds are separated and thereupon, identified and/or quantified from a principal of interaction of light with every compound appeared effects. Therefore the separated compounds are consecutively guided through a detector flow cell and radiated with a known amount of light, whereupon the result of radiation is measured. People can for example measure the absorbance, or the fluorescence, or the luminescence, etc.. Devices suited for suchlike analysis are the spectrophotometer, the fluorimeter, the luminometer, the refractive index meter, the polarity meter, the turbidity meter, etc.. A drawback of the known devices is that each device is suited for the measurement of only one property of the investigated compounds. Consequentely for fundamental analysis, measurement is obligatory with different devices, which is time consuming, laborious, and expensive because a few different devices had to be bought. An other drawback of the known devices is that the used detector flow cell has a relative big content, inwhich mixing of the previously separated compounds can occur. The present invention aims at removing the outlined drawbacks and to place at disposal a detector flow cell, which has a small content and with which it is possible to perform all possible light investigations on compounds in one and the same device.

For this purpose the invention of a detector flow cell is characterized by an open tubular transit channel for the compounds to be investigated, and a number, in the main transverse to the open tubular transit channel out stretched optical fibers, which optically are coupled with the interior part of the open tubular transit channel, and which are coupled with a light source and/or a light detector at one of the extremities. Further details of the invention will become apparent hereinafter in connection with detailed transcriptions of the drawings.

Figure 1 schematically illustrates a transverse section of an optical fiber;

figure 2 schematically illustrates the construction of a performance of a detector flow cell according to the invention;

figure 3 schematically illustrates a cross section of a detector flow cell according to figure 2;

figure 4 schematically illustrates an alternative construction of a detector flow cell according to the invention;

figure 5 shows a variance of the construction of figure 4;

figure 6, figure 7 and figure 8 show a variance of the performance of a construction of figure 2;

figure 9 and figure 10 schematically illustrate a transverse section of an alternative construction of a detector flow cell according to the invention;

figure 11 schematically illustrates three applications of a detector flow cell according to the invention;

figure 12 and figure 13 schematically illustrate two applications of a detector flow cell according to the invention;

figure 14 and figure 15 schematically illustrate a detail of a performance of a detector flow cell according to the invention;

figure 16 schematically illustrates a variant of a detector flow cell according to the invention;

figure 17 schematically illustrates an example of a complete measuring arrangement according to the invention.

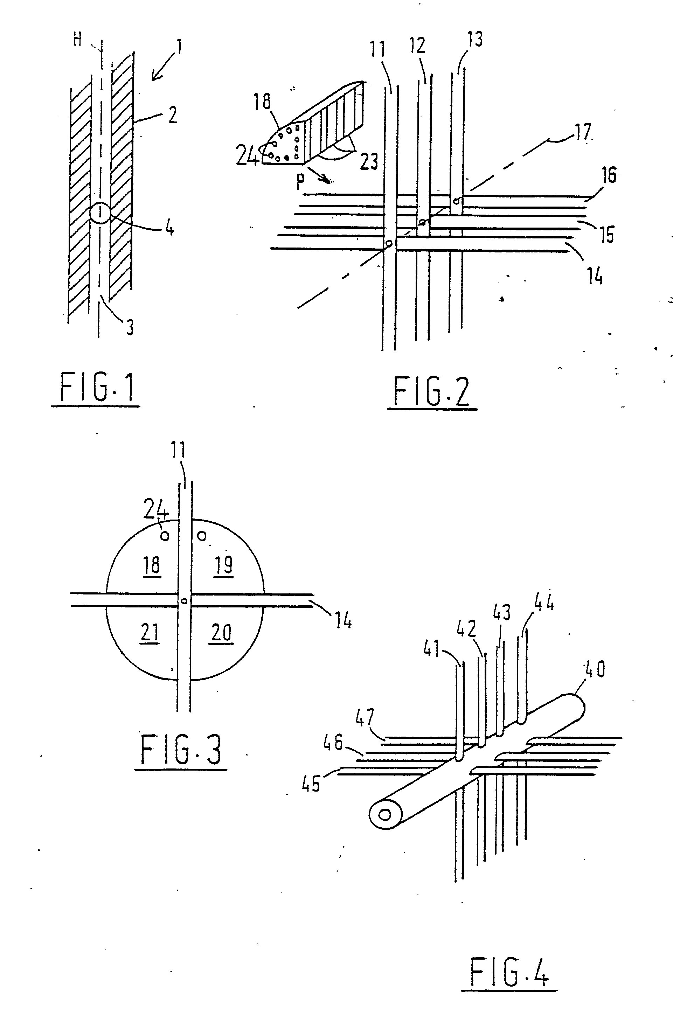

Figure 1 schematically illustrates a transverse section of an optical light guide 1, such as a glas fiber with a cladding 2, and a core 3. The core 3 is the properly light guide and the cladding 2 accomplishs on the known manner, that the in the core moving light signals can not escape. In the light guide 1 a transverse hole 4 is fixed, which has the same diameter as the core 3 in the shown example, and of which the heart lies on the heart line of the optical fiber. The diameter of the hole even can be smaller or bigger than the core. Essential is that the compounds to be investigated can flow through the transverse hole.

The transverse hole 4 can be carried out on every suited way for example with a laser beam, or a water beam, or ultra sonic drilling, or in the case of a relative big diameter by means of mechanical drilling. A detector flow cell according to the invention can be composed of a number of the in figure 1 presented transverse drilled optical fibers with the transverse holes online fixed together. The consecutive transverse holes 4 connect together on this way form an open tubular transit channel for the compounds to be investigated. Adjacent optical fibers cross each other under a corner sothat the different optical fibers are distinguished. Also such a framing facilitates the connection with the light sources and/or light detector elements at the end of the optical fibers. At last such a framing makes a better performance of some measurements possible.

On a simple manner the optical fibers can be connected by stringing up a wire or a thin bar through the hole of the optical fibers. The on that manner stringed optical fibers are placed in the right state, squeezed together, and next fixated.

Alternatively first the optical fibers are placed in the right state, then fixated, previously to making the joint cross drilling through the intersection of the optical fibers. In this case the cross drilling even can be bigger than the whole diameter of the optical fibers, provide that provisions are made for obtaining a closed open tubular transit channel. If according to a stringed method made structure of optical fibers a hole bigger than the optical fibers is desirable, then after fixation of the optical fibers the diameter of the cross drilling can be enlarged, provide that provisions are made for obtaining a closed open tubular transit channel.

Figure 2 illustrates in a manner of speaking an example of a possible construction of a detector flow cell according to the invention. Showed are a number of optical fibers 11 up to and including 16, which cross each other under a corner of 90 degrees, with the cross drilling online on the place of the intersection, as indicated by a heart line 17. The in this manner obtained construction can for example be consolidated by pouring into a suited casting mould, or by means of mounting with a segment, which is doped in a suited gum, such as is indicated by an arrow 18 in figure 2.

In the showed configuration four segments with corners of 90 degrees are necessary.

In figure 3 the segments are indicated with the number 18, 19, 20 and 21. If adjacent optical fibers in regard to each other are different orientated, then more or less consolidation segments are necessary. The consolidation segments can be made of metal or of an other suited material; can contain grooves 23 (figure 2) for a better adjustment and fixation; and can be equiped with cooling and/or heating means 24 as is shown in figure 2 and figure 3.

Figure 4 schematically illustrates a variant of a detector flow cell according to the invention. The in figure 4 showed performance includes a capillary tube 40, which for example can be made of steel, and which forms an open tubular transit channel for the compounds to be investigated. Tube 40 is provided with a number of transverse drillings perpendicularly on the heart line of the tube, with diameters which are smaller than the diameter of the tube. The transverse drillings in regard to each other can have different orientations. The transverse drillings shown in figure 4 cross each other at a corner of 90 degrees. Through the successive drillings optical fibers 41, 42, 43, 44 respectively 45, 46, 47 are conducted, with diameters corresponding with the diameters of the transit drillings. If necessary and if present the primary coating is temporary removed. The optical fibers can with regard to the capillary tube be consolidated on a for that purpose suited manner, for example by pouring in a suited casting mould, or with the aid of segments as is shown in figure 2 and figure 3.

The in the capillary tube 40 stretched parts of the optical fibers are removed, for example by means of a laser beam, or a water beam, or on an ultra sonic manner, or on a mechanical manner, or on a chemical manner such as etching.

Alternatively optical fibers can be brought in from both sides into the transverse drillings of the tube 40. In that case, if at the place of the drillings the capillary tube is filled with a wire it is not necessary to remove parts of the optical fibers, which eventually are stretched in the inner part of the capillary tube 40.

Noticed is that in the performance form shown in figure 4 the distance between the successive optical fibers can be selected arbitrary. This is also possible with other performance forms' such as for example in figure 2.

Further noticed is that, in the example of figure 4 the optical fibers in regard to each other can have different orientations. The optical fibers which are showed in the performance form in figure 4 cross each other at a corner of 90 degrees.

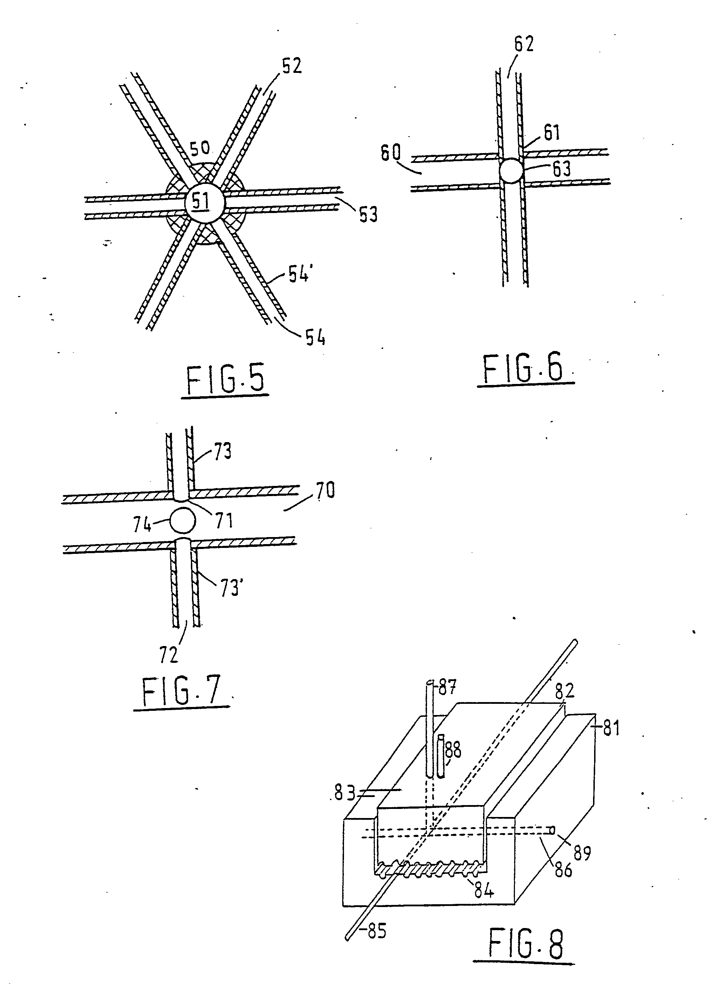

The in figure 4 showed performance form can easily be modified so that two or more optical fibers with different orientations are orientated in one measuring plane. An example of such a performance form, which particularely is important for measurements such as laser induced measurements, or light scattering measurements as is shown in figure 5. Figure 5 shows a capillary tube 50 with a capillary channel 51 and with three under a corner of 60 degrees crossing optical fibers 52, 53, 54, which heartlines lay in one measuring plane.

If necessary, the through the wall of the tube 50 out stretched parts of the optical fiber can be stripped of the cladding as for example is shown with the optical fiber 54. The cladding of the fiber 54 is indicated with 54'.

Also with a performance example without a capillary tube it is possible to bring about that optical fibers with different orientations in regard to each other are brought together in one measuring plane. An example is shown in figure 6. In a relative thick optical fiber 60 a transverse drilling 61 is made in which a thinner optical fiber 62 is stringed. Before or after fixation of a few suchlike constructions, with crossing points online, at the place of the intersections an open tubular transit channel 63 is fixed, with a diameter which is as big as the thinnest optical fiber or bigger. In this manner the transit channel stretchs out through the intersections of a number of crossing optical fibers, on the same way as in figure 2 forming an open tubular transverse transit channel for compounds to be investigated. As a matter of course with the construction as shown in figure 6 also a combined configuration with single transverse drilled optical fibers can be made.

Figure 7 shows a modification of the performance form of figure 6 by which in a first optical fiber 70 a transit drilling 71 is fixed, of which the diameter is the same as the core 72 of second optical fibers 73, 73'. The claddings of the optical fibers 73, 73' are removed over a short distance and the in this manner obtained discladded cores are stinged in the transit drilling 71, and fixated for example with gum. Next a transverse transit drilling 74 through the heart of the intersection is made, and can a number such like detector cells in combination with single drilled optical fibers being brought together, and in this manner forming a multi purpose detector flow cell. An alternative consolidation segment with optical fibers and an open tubular transverse transit channel through some optical fibers according the invention is shown in figure 8. and consists of an U shaped mount 81, with a well fitted segment 82, together forming a block 83. This consolidation segment 83 contains grooves 84, which run parallelly in regard to each other and in regard to the U shaped mount 81 and the segment 82, as is shown in figure 8. After adjustment of the optical fibers in the grooves 84 and fixation a transverse hole 86 is made perpendicularly through the fibers. The diameter of the in this manner formed open tubular transit channel 86 can be smaller or bigger than the diameter of the cores of the used optical fibers 85. Eventually different types of optical fibers, such as mono mode optical fibers, multi mode optical fibers, and gradient mode optical fibers with different diameters of cores and/or claddings can be used. In one plane perpendicularly on the transverse channel 86 and perpendicularly on the drilled optical fibers 85 provisions can be made for other optical fibers 87, on such a way that one end of the optical fiber 87 can touch the cladding of the drilled optical fiber 85 at the place of the transverse drilling. Parallelly to these optical fibers 87 also other optical fibers 88 can be fixed onto the open tubular transverse transit channel 86. At both sides of the transit channel 86 means 89 are made for connections with the flow stream.

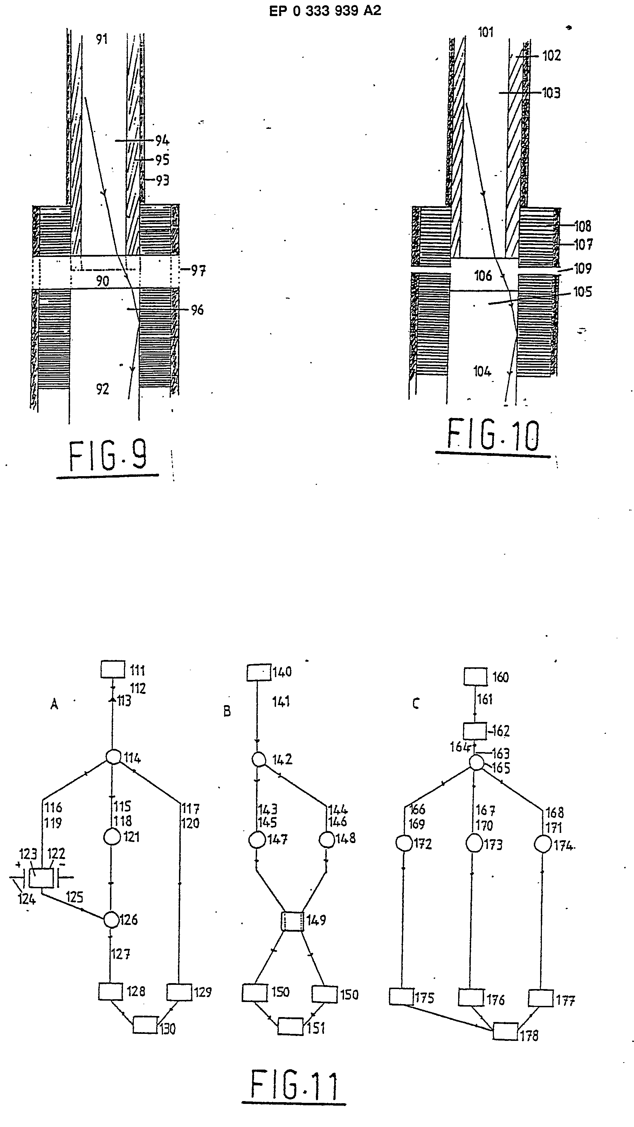

In figure 9 a schematic transverse section of an alternative transit channel according to the invention is shown and consists of a small optical fiber 91, which is pushed into the end of a bigger optical fiber 92. For that purpose the primary coating 93 of the smaller fiber 91 is removed and the core 94 and the cladding 95 of this fiber are pushed over a short distance into a bigger optical fiber of which the core 96 over a short distance is removed. The diameter of the cladding 95 is the same as the diameter of the core 96.

The two optical fibers 91 and 92 are glued together and at the intersection place of the two cores 94 and 96 a transverse hole 97 is fixed. The in this manner obtained detector flow cell 90 can be used for light measurements on compounds to be investigated.

In figure 10 a schematic transverse section of an alternative transit channel according to the invention is shown, and consisting of a small optical fiber 101 which with cladding 102 and core 103 are pushed over a short distance into a bigger optical fiber 104 from which over a short distance the core 105 is removed. The diameter of the cladding 102 is the same as the diameter of the core 105. The core 103 and the cladding 102 of the smaller optical fiber 101 do not touch the core 105 of the bigger optical fiber 104, in this manner leaving a space 106 between the cores 103 and 105. Both fibers are glued together and at the place of the space 106 through the primary coating 107 and the cladding 108 of the bigger optical fiber 104 a transit channel 109 is drilled. The in this manner obtained detector flow cell 106 can be used for light measurements on compounds to be investigated.

In figure 11 a), b), and c) a few schematic configurations for respectively single beam-, dual beam-, and triple beam measurements according to the invention are shown.

In figure 11 a) schematically a configuration for a single beam measurement is represented wherein light from a light source 111 with a microlens 112 is focused on the entrance of an optical fiber 113 and guided through this fiber to a branching element 114 where the light beam is spliced in three beams 115, 116, 117 which are guided through three optical fibers 118, 119, 120. Light 115 guided through the fiber 118 goes through a detector flow cell 121 according to the invention. Light 116 guided through the fiber 119 goes through an intervenient region 122 of an optical non linear material 123 from which the refraction index can be changed by means of an external electric field 124. The electrically induced light beam 125 is added to the light beam from the detector flow cell 121 by means of a T-coupler 126. Through the optical fiber 127 the combined light beams are guide to a light detector 128. Light 117 guided through the fiber 120 goes to a light detector 129 and services for light intensity corrections of the light source. With the aid of Fourier transformation, the strenght of the external electric field 124 in the intervenient region 122, and the signals from both light detectors 128, 129, simultaneous multiwavelenght measurements 130 from the ultra violet to far into the infra red region are possible. The in this manner described interferrometer is known as the interferrometer of Mach-Zehnder, which parallelly is coupled with a detector flow cell according to the invention.

In figure 11 b) schematically a dual beam configuration is shown wherein light from a light source 140, for example a flashlamp, is guided through an optical fiber 141 and by means of a branching element 142 spliced in two light beams 143, 144. The beams 143 and 144 are guided through the fibers 145 and 146 resp. which contain a same type of detector flow cell 147 and 148 resp. according to the invention. One of the detector flow cells is used as reference cell through which only eluens without compounds flows, the other detector flow cell is used as measuring cell through which eluens with the compounds to be investigated flows. Light from both detector flow cells are guided to a monochromator 149, for example a prism. The prism is at one side equiped with a solid state light-sensitive, multi-channel array 150, such as a diode array, or a charge transfer device, or a charge coupled device, or a charge injection device for simultaneous multiwavelenght measurements 151 in the ultra violet to near infra red region.

In figure 11 c) schematically a triple beam configuration is shown, wherein light from a light source 160, for example a bulp type flashlamp, is guided through an optical fiber 161 to a monochromator 162, for example a grating. From the grating 162 monochromatic light is focused on the entrance of an optical fiber 163 by means of a microlens 164. In a branching element 165 the monochromatic light beam is spliced in three beams 166, 167, 168, and guided through the optical fibers 169, 170, 171, resp. The beams separately go through a detector flow cell of the same type 172, 173, 174, according to the invention. One detector cell serves as measurement cell for the components to be investigated. One detector flow cell serves as reference cell through which only eluens without compounds flows. The third detector flow cell stays empty and serves as intensity corrector for the monochromatic light beam from the grating 162. Light from the fibers 166, 167, and 168 are converted in electric signals by means of a light detector 175, 176, 177, for example a PIN diode. The PIN diodes 175, 176, 177, form an electronic unit 178 with which particularly through simultaneous measurements fluctuations from the system can be eliminated.

With the configuration showed in figure 11 c) specially small spectral bandwith measurements can be performed.

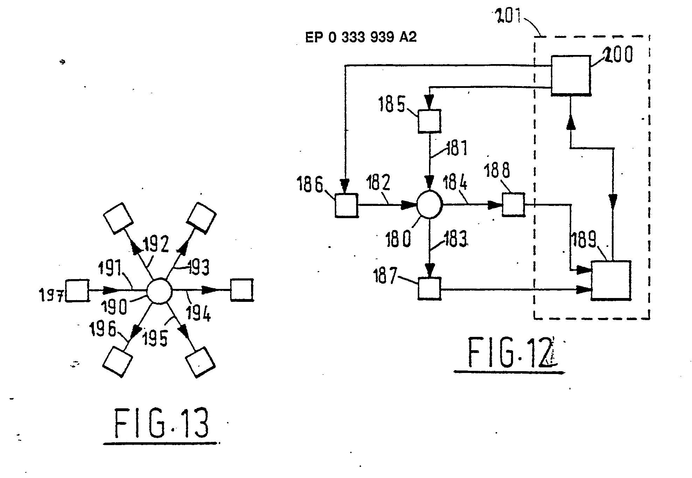

Other configurations and also combinations from figures 11 are possible and are obvious for persons working in this field. According to the invention other configurations for light measurements on compounds to be investigated are shown in figure 12 and figure 13. Figure 12 shows an open transit channel 180 for compounds to be investigated. Transverse on this channel a number of optical fiber sections, in this example four, are stretched out, which, according to the previously described method, optically are coupled with the channel. The optical fibers 181 up to and including 184 all can, or cannot be oriented in one measuring plane. For light absorbance measurements through the transit channel 180 the optical fibers 182 and 184 respectively the optical fibers 181 and 183 should be aligned in one line. At the extremities of the optical fibers 181 and 182 light sources, 185, 186, such as for example a laser or a light emitted diode, are connected. Where as the extremities of the optical fibers 183 and 184 light detectors, 187, 188, such as a light sensitive semi conductor and/or a single channel photomultiplier are placed. As well as the light sources as the light detector are driven in such a manner that fluctuation are eliminated as much as possible.

As a matter of course, as previously is described, a number of cells can be combined to a multi purpose detector flow cell. In an other configuration of the same detector flow cell for example one light source and three light detectors can be combined for light scattering measurement applications, where as in an other configuration of the same detector flow cell exclusively light detectors at the extremities of the optical fibers are connected in order to measure phosphorescence, or fluorescence, or luminescence. For phosphorescence and fluorescence measurements the compounds previously are radiated which also can be performed in the same detector flow cell.

Figure 13 shows for example a configuration of optical fibers 191 up to and including 196, which optically are connected with a transit channel. With the section 191 a laser can be connected and with the other sections a light detector with the purpose to measure scattering intensities in liquids.

In figure 12 schematically is shown that the light detectors 187, 188 advantagely can be connected with an automatic process control unit 189, such as a computer, which the measuring results automaticly converts in an end result and the results sends to a data storage, such as a compact disk write once read many device (CD-WORM), and/or a screen, and/or a printer, and/or a recorder. The process control unit 189 also services as a confirmation unit 200 for the light detectors and light sources, in such a manner that as much as possible simultaneously measurements with those light detectors and light sources are performed, which form an inseparable measuring unit; and can be programmed to fulfil a complete previously determinated program.

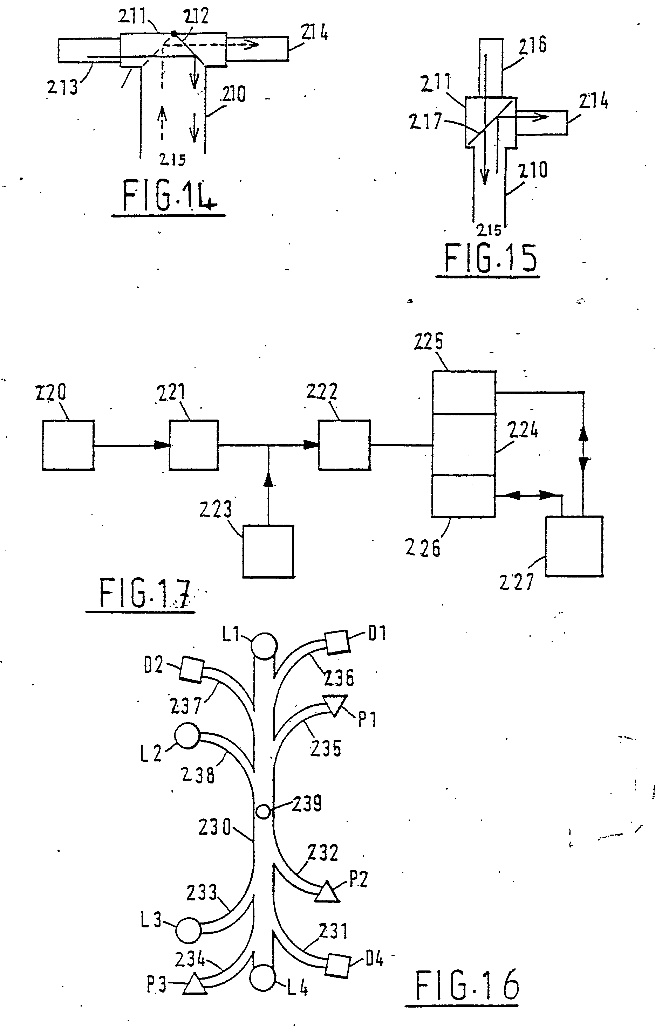

According to a further develop each extremity of an optical fiber can be equiped with as well as a light source as light detector, which at choiche, automaticly can be changed by an arrangement 209 which is connected with the extremity of the fiber, as is shown in figure 14. For that purpose as for example shown in figure 14 a switching mirror can be used. Figure 14 shows an end of an optical fiber 210, which is provided with a house 211, inwhich the switching mirror 212 is housed. The mirror focuss light from the light source 213 on the fiber 210 in the solid line indicated state. The mirror focuss light from the detector flow cell 215 to a light detector 214 in the dashed line indicated state. An application wherein light source and light detector simultaneously operate at the same end of an optical fiber is shown in figure 15, wherein a for one direction semi permeable mirror is used. The house 211 is on such a way performed that the light source 216 and the optical fiber 210 are placed on line, and between them the semi permeable sloping mirror 217. Light from the detector flow cell 215 is reflected to the light detector 214.

According to an other modification of the construction of a detector flow cell according to the invention advantagely one or more debranched optical fibers can be used. A such like optical fiber, which commercially is available, schematically is shown and indicated with the number 230 in figure 16. The optical fiber contains a number, in this arbitrary chosen example eight, branches 231 up to and including 238, sothat together with the two ends of the optical fiber 230 ten optical connections with the main optical fiber are present. In the main optical fiber a transverse drilling 239 is made, which eventually with other drilled optical fibers can form a open tubular transit channel for compounds to be investigated. Alternatively instead of a tranverse drilling a capillary tube configuration as is shown in figure 5 can be practised. With the free extremities of the branched optical fibers light sources and light detectors are connected, which by preference automatically according to a previously determinated program can be confirmed. In the shown example light sources L1 up to and including L4 are present, each of which a specified amount and kind of light can radiate. The light source L1 for example should radiate red light from a laser, L2 ultra violet light, L3 blue light and L4 infra red light et..Besides light detectors D1 up to and including D3 are present, each of which is suited for the detection of different kinds of light. Also prims P1, P2 and P3 are shown, which scatter the received light into thier components, and next transmit the separated wavelenghts to a solid state, light-sensitive, multi channel array.

All couplings between optical fibers mutually and with other means, such as a prism, can be improved by matching thier refracive indexs with suited components, or if necessary by contructing of a microlens, for example a conical microlens or a cylindrical microlens, on the end surface of an optical fiber.

With optical fibers all three kinds of optical fibers are meaned. A complete liquid chromatography arrangement schematically is shown in figure 17. The arrangement contains a liquid reservoir 220 with eluens, which by means of a pomp 221 is delivered to a chromatographic column 222. An injection system 223 brings the compounds to be separated onto the column. The column is connected with a detector flow cell 224, according to the invention. The detector flow cell is provided with light sources 225 and with light detectors 226, which schematically are linked with an automatic process control- and converting unit 227. If desired, the process control- and converting unit also can maintain the connection between an optical fiber and a light source or a light detector as is shown in figure 14.

The process control unit, the detection unit and the detector flow cell system according to the invention can be combined to a multi purpose detector device, which for example can be used in liquid chromatography, gas chromatography, super critical fluid chromatography, capillary zone electrophoresis, online measurents, flow injection systems, etc,; and is schematically shown in figure 18.

The multi purpose detector device atleast contains; a light source; a detector flow cell according to the invention; a monochromator; a light source; a process control unit; a data storage unit; connectors and conduit leads for the flow stream; connectors for external means; warming and/or cooling means.

After the preceding many modifications are obvious for a mean expert. Those modifications are considered to remain within the scope of the invention.

## Claims

1. A detector flow cell for identification and quantification of compounds with the aid of light characterized by an open tubular transit channel for the compounds to be investigated, and a number, in the main transverse to the open tubular transit channel out stretched optical fibers, which optically are coupled with the interior part of the open tubular transit channel, and which are coupled with one or many light sources and/or one or many light detectors at the extremities of the optical fibers.

2. A detector flow cell as claimed in 1 characterized by the open tubular transverse transit channel which is formed by online orientated transverse drillings through consecutive optical fibers.

3. A detector flow cell as claimed in 2 characterized by the optical fibers which have a number of different orientations in regard to each other.

4. A detector flow cell as claimed in 3 characterized by the optical fibers which in regard to each other are fixated by means of segments according to the orientation of the fibers.

5. A detector flow cell as claimed in 4 characterized by segment like elements which are glued by means of a suited gum.

6. A detector flow cell as claimed in 4 or 5 characterized by segments which are provide with grooves for a better uptake and fixation of the fibers.

7. A detector flow cell as claimed in 1 up to and including 6 characterized by an arrangement of in one plane orientated optical fibers, by which at the place of the intersection a transverse drilling is made.

8. A detector flow cell as claimed in 7 characterized by at least an arrangement of an in one plane crossing optical fibers, which contain a relative thick optical fiber, through which a transverse drilling is made, and through which second fibers are stinged.

9. A detector flow cell as claimed in 7 characterized by at least a arrangement of an in one plane crossing optical fibers, which at least contains a first optical fiber, which is provided with a transverse drilling with a diameter, which is equally to the diameter of the cores of second optical fibers, which are discladded over a short distance, and in this manner from both sides stinged in the transverse drilling of the first optical fiber; and thereafter at the place of the intersection of the cores a transverse drilling is made.

10. A detector flow cell as claimed in 2 characterized by an open tubular transit channel formed by an capillary tube, which is provided with a number of transverse drillings inwhich optical fibers are stinged, by which the in the tube out stretching parts of the fibers are removed.

11. A detector flow cell as claimed in 10 characterized by the transverse drillings in the capillary tube, which can have previously determinated orientations in regard to each other.

12. A detector flow cell as claimed in 11 characterized by at least two transverse drillings, which cross each other.

13. A detector flow cell as claimed in 10 up to and including 12 characterized by the optical which are consolidated and fixated by means of consolidation segments.

14. A detector flow cell as claimed in 13 characterized by consolidation segments, which are fixed with gum.

15. A detector flow cell as claimed in 13 or 14 characterized by consolidation segments, which contain grooves for a better fixation of the optical fibers.

16. A detector flow cell as claimed in 10 up to and including 15 characterized by that the transverse drillings in the capillary tube have a diameter, which is equal to the diameter of the core of the used optical fibers, and that the discladded extremities are stinged into the transverse drilling.

17. A detector flow cell as claimed in one of the preceding claims characterized by a first optical fiber, which is stinged, over a short distance, with the core and the cladding into the end of a second optical fiber, from which the core, which has a core diameter equally to the diameter of the cladding of the first optical fiber, is removed over a short distance; and by which at the place of the core connection a transverse drilling is made.

18. A detector flow cell as claimed in 17 characterized by a first optical fiber, which core and cladding do not touch the core of the second fiber, in this manner leaving a space, which is connected with an analysis arrangement by means of a transverse drilling through the primary coating and cladding of the second optical fiber, without touching the cores.

19. A detector flow cell as claimed in one of the preceding claims characterized by an arrangement of parallelly mounted, transverse drilled optical fibers, which eventually can be connected with second fibers, which perpendicularly are orientated onto the cladding of a transverse drilled optical fiber.

20. A detector flow cell as claimed in 19 characterized by second optical fibers, which are perpendicularly orientated on the open tubular transverse transit channel.

21. A detector flow cell as claimed in one of the preceding claims characterized by atleast one optical fiber, which atleast one time is provided with a branching element, for connection with second optical fibers with one free extremity at which a light source or a light detector is connected.

22. An analysis arrangement for identification and quantification of compounds characterized by a detector flow cell according to one of the preceding claims.

23. An analysis arrangement as claimed in 22 characterized by a converting unit, which, for processing of the obtained measuring results, is connected with the extremities of the optical fibers, which contain liht sources and/or light detectors.

24. An analysis arrangement as claimed in 23 characterized by the management unit, which also is suited as a confirmating arrangement for the light sources and specifically for simultaneous measurements at the light detectors.

25. An analysis arrangement as claimed in 24 characterized by the management- and processing unit which is suited for processing the light sources

26. An analysis arrangement as claimed in 25 characterized by the processing and management unit which can perform a previously determined measuring cyclus according to a previously determinated program.

27. An analysis arrangement claimed in one of the preceding claims characterized by atleast one transverse drilled optical fiber, at which at the extremity a house is connected, in which means are placed, which by choice the optical fiber can connect with a light source or a light detector.

28. An analysis arrangement claimed in 27 characterized by mean which can be a sloping switching mirror.

29. An analysis arrangement claimed in one of the preceding claims characterized by atleast one transverse drilled optical fiber at which at its extremity a house is provided with means which by choice the optical fiber can provide with a light source or a light detector.

30. An analysis arrangement claimed in 29 characterized by a mean which can be a semi transparent sloping mirror.

31. An analysis arrangement claimed in 27 or 28 and claimed in 29 or 30 characterized by means which can be processed by a processing and management unit.

32. An analysis arrangement claimed in one of the preceding claims characterized by couplings between optical fibers and other means which can be improved; by matching thier refracive indexs or; by constructing of a microlens at the end surface of an optical fiber.

33. An analysis arrangement claimed in one of the preceding claims characterized by a measuring device with which single beam-, or dual beam- or multi beam measurements can be performed.

34. An analysis arrangement claimed in one of the preceding claims characterized by a measuring device with which simultaneously single beam-, dual beam- and multi beam measurements can be performed.

35. An analysis arrangement claimed in 33 or 34 characterized by a measuring device with some optical fibers, which contain intervenient regions of optical non linear compounds, with which depending on an applied electric field over the intervenient regions, simultaneous multiwavelength measurements can be performed from the ultra violet region upto far in the infra red region.

36. An analysis arrangement claimed in 33 or 34 characterized by a measuring device with prims as monochromator with which simultaneous multi channel measurements can be performed.

37. An analysis arrangement claimed in 36 characterized by solid state, light-sensitive, multi channel arrays connected with the prims, with which simultaneous multi wavelenght measuremnts from the ultra violet region upto near infra red region can be performed.

38. An analysis arrangement claimed in 33 up to and including 37 characterized by a measuring device which contains no mechanically driven or moved parts.

FIG.1

FIG.2

FIG.3

FIG.4

FIG.5

FIG.6

FIG.7

FIG.8

FIG·9

FIG·10

FIG·11

EP 0 333 939 A2

FIG·13

FIG·12

FIG·14

FIG·15

FIG·17

FIG·16